# EUROPÄISCHE PATENTANMELDUNG

(11) **EP 1 186 642 A1**
(43) Veröffentlichungstag der Anmeldung: **13.03.2002**
(21) Anmeldenummer: 00119824.1
(22) Anmeldetag: 12.09.2000
(51) Int. Cl.: C09J 5/00, C09J 5/06

(54) **Klebstoffe für den Karosseriebau**

(71) Anmelder: Sika AG, vorm. Kaspar Winkler & Co., CH-8048 Zürich (CH)
(72) Erfinder: Merz, Peter W., 8832 Wollerau (CH)
(74) Vertreter: Blum, Rudolf Emil Ernst

(57) **Zusammenfassung**

Es werden spezielle Zweikomponentensysteme beschrieben, die für die Unterfütterung, Bördelfalzverklebung und Abdichtung von Karosserieabschnitten, insbesondere für die Bördelfalzversiegelung von Fahrzeuganbauteilen geeignet sind. Die erfindungsgemässen Zweikomponentensysteme erreichen innerhalb der vorgegebenen Taktzeit die für die Montage der Anbauteile an die Karosserie erforderliche Griff-Festigkeit und die für den Fertigungsprozess bis und mit dem KTL-Durchgang erforderliche Festigkeit und Masshaltigkeit aufgrund einer zweifachen Vernetzung der Versiegelungsmasse. In einer Ausführungsform wird die Oberfläche des Zweikomponentensystems durch eine UV-induzierte Reaktion und aufgrund der Vernetzung des Zweikomponentensystems bis zur Transportfähigkeit vorvernetzt.

Es werden auch Zweikomponentensysteme beschrieben, die absichtlich nur teilweise bis zu einer Konsistenz vernetzen, die eine robuste Prozessführung durch die Reinigungsbäder erlauben und erst durch einen weiteren Härtungsprozess, z.B. im KTL-Umluftofen, vollständig härten. Solche Systeme kommen insbesondere für Anwendung, wie z.B. Unterfütterung oder Bördelfalzverklebung, in Betracht.

## Beschreibung

Die vorliegende Erfindung betrifft spezielle Klebstoff-, Dichtstoff- bzw. Beschichtungsmaterialien, die als Prozesswerkstoffe z.B. im Karosseriebau ihren Einsatz finden sowie Verfahren zu deren Anwendung. Als Anwendungen seien u.a. die Bördelfalzverklebung und -versiegelung (auch als Feinnahtabdichtung bezeichnet), die Grobnahtabdichtung und strukturelle Verklebung an der Karosserie, und die Unterfütterung von z.B. Anbauteilen erwähnt. Dabei ermöglichen die erfindungsgemässen Materialien eine verbesserte Qualität bei niedrigeren Prozesskosten, insbesondere der Bördelfalzversiegelung.

Bei der Bördelfalzversiegelung im Kraftfahrzeugbau wird üblicherweise über den nach aussen offenen Bereich des Falzes ein aushärtbares Material, insbesondere in Form einer Raupe, gelegt, das in einem ersten Härtungsprozess, beispielsweise induktive Erwärmung des Bleches im Bereich der härtbaren Masse, geliert und in einem nachgeschalteten Härtungsprozess, insbesondere dem KTL-Umluftofen (= Ofen nach dem kathodischen Tauchlackbad), vollständig ausgehärtet wird. Als härtbare Masse kommt hier insbesondere PVC zum Einsatz.

Dieses Verfahren bereitet dann Probleme, wenn das härtbare Material Lufteinschlüsse überdeckt oder vor der endgültigen Härtung Flüssigkeiten oder Gase aufgenommen hat, die sich bei der späteren Ofenhärtung ausdehnen und nach aussen sichtbare Blasen bilden. Diese Blasen stören zum einen die Optik (optische Einbussen) und bilden zum anderen Schwachstellen der Versiegelung gegen korrosive Angriffe.

In einer alternativen Fertigung bei der Herstellung von Fahrzeuganbauteilen, z.B. von Türen, Heck- und Frontklappen, Schiebedachdeckeln etc., werden zwei Blechteile verbunden. Dabei wird im Karosserie-Rohbau zuerst ein Klebstoff auf das beölte Metallblech, meistens bestehend aus Stahl, feuerverzinktem bzw. elektroverzinktem Stahl oder Aluminium, entlang der Kante des Aussenteiles im allgemeinen mittels Raupenauftrag, insbesondere Wirbelsprühverfahren (bzw. Swirl) in einer Schichtstärke von ca. 0.2 mm aufgetragen und nach Einlegen des Innenteiles wird die Aussenkante des Aussenteiles um die Peripherie des Innenteiles gebördelt. Die korrosionsgefährdete Kante des Aussenteiles wird erst danach, im Lackierprozess, meistens von Hand mit einem Dichtstoff, wie z.B. PVC-Plastisole, versiegelt. Aus produktionstechnischen, qualitativen und wirtschaftlichen Gründen besteht der Wunsch die Bördelfalzversiegelung aus dem Lackierprozess zu entfernen und in den Karosserie-Rohbau zurückzuverlagern. Mit anderen Worten sollen im Lackierprozess keine Applikationen stattfinden, die nicht der Funktion Lackierung zuzuordnen sind (Beeinträchtigung der Lackoberfläche). Bis heute hat sich dieser Wunsch noch nicht zufriedenstellend verwirklichen lassen, da noch kein sicheres und wirtschaftliches Verfahrenskonzept und Klebstoffmaterialien für diese Aufgabe zur Verfügung stehen.

In der DE 33 14 896 A1 wird für die Bördelfalzversiegelung ein Klebstoff beschrieben, welcher mittels Ultraviolett(UV)-Bestrahlung vorvernetzt und thermisch im Ofen nach Durchlauf durch die Reinigungsbäder bei Temperaturen um 180°C zusammen mit der KTL-Grundierung, vollständig ausgehärtet wird. Neben den Vorzügen einer Härtung durch UV-Bestrahlung hat dieser Klebstoff den Nachteil, dass die Wirkung und somit auch die Vernetzung nur von Aussen nach Innen erfolgt. Bei grösseren Schichtdicken von mehr als 0.3 mm ist eine ausreichende Vorvernetzung auch bei längerer Bestrahlungsdauer nicht mehr gewährleistet und die darunterliegenden Schichten bleiben unvernetzt im pastösen Zustand. Diese pastöse, unter der vorvernetzten Oberfläche liegende Schicht kann gewichtige negative Auswirkungen auf die optische Qualität der Versiegelung haben. Erstens, da die Bauteile zum Teil auch manuell transportiert werden, hat dies zur Folge, dass der Klebstoff der Versiegelung zwar anfassbar, jedoch nicht griffest ist, was bei Fingerabdrücken zu einer visuellen Einbusse führen kann. Zweitens neigen Klebstoffe dazu, insbesondere im unvernetzten Zustand, Feuchtigkeit aufzunehmen, was bei der thermischen Beaufschlagung im KTL-Umluftofen zu Blasenbildungen führt. Dieser oben beschriebene Nachteil ist insofern von Bedeutung, als es aus wirtschaftlichen Gründen wünschenswert ist, die Bauteile an einer zentralen Stelle fertig, d.h. inklusive der Versiegelung, herzustellen und von dort an externe, auch weltweit entfernt liegende Fertigungslinien zu versenden, wo sie direkt in die Reinigungsbäder - den ersten Abschnitt des Lackierprozesses-gelangen. Dies beinhaltet ein erhebliches Einsparungspotential, da bei den externen Fertigungslinien auf einen Karosserie-Rohbau und auf die im Lackierprozess ohnehin unerwünschte Versiegelung verzichtet werden kann, bedingt aber eine gewisse Festigkeit der Schicht.

Bekannt sind auch bereits feuchtigkeitshärtende oder thermisch härtbare Einkomponenten-Klebstoffe. Feuchtigkeitsreaktive einkomponentige Systeme würden zwar durchhärten, haben jedoch erhebliche Nachteile wie z.B., dass die Härtung u.a. von der Wasserdampfdiffusion abhängt und somit für Fertigungslinien zu langsam ist.

Thermisch-härtbare einkomponentige Klebstoffe sind auf eine genaue Einhaltung des Prozessablaufes angewiesen, da bei unzureichenden Härtungsbedingungen, z.B. beim Fehlen ausreichend hoher Temperaturen über den gesamten Bereich, der Klebstoff unvollständig vernetzt und somit die geforderte Funktion nicht erreicht wird. Solche Klebstoffe basieren meistens auf Epoxidgruppen enthaltenden Bindemitteln, die erst oberhalb von 130°C, besser um 180°C mit einem thermisch-labilen Härter vernetzen.

Im Karosseriebau werden PVC bzw. Polyacrylat enthaltende Systeme mittels Induktion thermisch vorgeliert, um in den Reinigungsbädern nicht ausgewaschen zu werden. Jedoch hat es sich in der Praxis gezeigt, dass eine genaue thermische Prozessführung mit den heute zur Verfügung stehenden Induktionsanlagen nicht möglich ist, und eine Temperaturdifferenz von bis zu 80°C und mehr ist entlang der Induktionsschleifen rund um das Bauteil nicht selten. Zudem ist die Induktion sehr empfindlich was die Lage der Induktionsschleife relativ zum Bauteil betrifft. Deren Lage kann durch äussere Einflüsse, sprich Wartung, Stoss bzw. Erschütterung verändert werden, was direkt einen Einfluss auf die thermische Beaufschlagung und somit eine unkorrekte Härtung (entweder untervernetzt oder überbrannt) zur Folge hat. Aus diesem Grund ist die Erwärmung mittels Induktion für thermisch-härtbare Systeme im speziellen bei kurzen Taktzeiten, da hier in kurzer Zeit eine sehr hohe Wärmebeaufschlagung erforderlich ist, zu wenig robust.

Ziel der vorliegenden Erfindung war es deshalb einen Klebstoff bereitzustellen, der z.B. im Rohbau appliziert werden kann, ohne dass grössere Änderungen an bereits bestehenden Anlagen und Fertigungsabläufen durchgeführt werden müssen, der rasch anfassbar wird und eine solche Grundfestigkeit aufweist, dass diese z.B. auch für einen weltweiten Transport der "rohen" bzw. beölten Anbauteile, auch als Teiletourismus bezeichnet, ausreicht. In einem weiteren Aspekt soll auch die optische Qualität der Bördelfalzversiegelung, welche auch nach einem längeren Transport der Anbauteile durch verschiedene klimatischen Zonen einwändfrei bleiben und eine glatte Oberfläche ohne Krater, Risse etc. aufweisen sollte, gewährleistet werden. Ferner soll durch den speziellen Klebstoff ein Verfahren ermöglicht werden, das sich ohne grössere Investitionen in den Karosserie-Rohbau einführen lässt, und mit dem wesentliche Fertigungsvorteile gewonnen werden können.

Dieses Ziel wurde erreicht durch Bereitstellung eines Zweikomponenten-Klebstoffs und eines Verfahrens gemäss den unabhängigen Ansprüchen. Spezielle Ausführungsformen sind Gegenstand der abhängigen Ansprüche.

Mit den erfindungsgemässen zweikomponentigen Klebstoffen, Dichtstoffen und Beschichtungsmaterialien kann z.B. eine Bördelfalzversiegelung und Unterfütterungsverklebung derart durchgeführt werden, dass eine Blasenbildung bei der späteren Ofenbehandlung unterdrückt sowie ein gutes Handling der versiegelten Teile im Gesamtprozess gewährleistet ist. Ein geeignetes Verfahren, insbesondere für die Bördelfalzversiegelung von Fahrzeuganbauteilen ist deshalb ebenfalls Gegenstand der vorliegenden Erfindung. Mit dem neuen Verfahrenssystem wird der Fertigungsablauf wesentlich vereinfacht und die Qualität erhöht.

In einer bevorzugten Ausführungsform sollen beispielsweise optische Einbussen infolge von Lufteinschlüssen vermindert werden, wie sie gelegentlich bei üblichen Standard-Versiegelungen, z.B. mit einem vorgelierbaren Einkomponenten-Klebstoff auf PVC-Basis oder Acrylat-Basis, z.B. PVC-Plastisol, erhalten werden, vorzugsweise werden solche Einbussen vollständig vermieden.

Die spezielle Problematik bezüglich der optischen Qualität der Bördelfalzversiegelung zeigen die Figuren auf.

Figur 1 zeigt einen Schnitt durch einen Türfalz mit gut aufgebrachter Versiegelung; und

Figur 2 zeigt einen Schnitt durch einen Türfalz mit möglichem Versiegelungsproblem.

Die Bezugszeichen in den Figuren haben die folgende Bedeutung:
- 1: Türfalz
- 2: Innenblech
- 3: Aussenblech
- 4: Bördelfalzklebstoff
- 5: Versiegelungsmasse
- 6: UV-gehärtete Oberfläche
- 7: Lufteinschluss
- a zu b: Blechverschiebung

Das erfindungsgemässe Zweikomponentensystem weist eine Harzkomponente und eine Härterkomponente auf und ist dadurch gekennzeichnet, dass eine Härtung erfolgt, indem es mittels mindestens zweier nicht gleichartiger Härtungsprozesse vernetzt, wobei der eine Härtungsprozess eine bei Raumtemperatur ablaufende Reaktion zwischen mindestens einem Harz und mindestens einem Härter ist und wobei mindestens ein weiteres vernetzendes System vorhanden ist, das mittels eines Härtungsprozesses vernetzt, bei dem die aktiven Bestandteile des vernetzenden Systems mittels einer photochemischen und/oder thermisch-aktivierbaren Reaktion reagieren. Ueblicherweise enthalten die aktiven Bestandteile des vernetzenden Systems, das mittels photochemischer Reaktion härtet, ein mittels Photoaktivator reaktivierbares Harz und einen photo-induzierbaren Photoaktivator und die aktiven Bestandteile des vernetzenden Systems, das thermisch-aktivierbar härtet, ein mittels Thermo-Aktivator reaktivierbares Harz und einen thermisch-induzierbaren Thermo-Aktivator. In speziellen erfindungsgemässen Zweikomponentensystemen kann zusätzlich ein Härtungsprozess mittels Feuchtigkeit erfolgen.

Während die Zweikomponenten-Reaktion zwischen Harz und Härter eine ausreichend lange Topfzeit gewährleisten sollte, um gute Benetzung der Oberfläche zu gewährleisten, ist mindestens ein weiterer Härtungsprozess (thermisch bzw. photochemisch angeregt) für rasche Vernetzungsreaktion konzipiert.

Für viele Anwendungen bevorzugt ist eine Härtung, die in mindestens zwei Stufen erfolgt, wobei mindestens die erste Stufe nur zu einer Teilvernetzung führt, wobei es oft speziell bevorzugt ist, dass durch die Teilvernetzung eine Konsistenz bzw. Festigkeit resultiert, welche einen robusten Prozess im Karosseriebau bis und mit KTL-Durchgang ermöglicht.

Um eine ausreichende Benetzung, insbesondere fettbeschichteter Oberflächen zu ermöglichen ist eine Topfzeit von mind. 30 Minuten gewünscht, gegebenenfalls dadurch erzielt, dass die Zweikomponenten-Reaktion erst durch eine kurze thermische Erwärmung, insbesondere eine Erwärmung auf 50 bis 150 °C in Gange gesetzt wird.

Erfindungsgemäss werden unter gewissen Bedingungen rasch härtende Bestandteile der Klebstoffmasse kombiniert mit mindestens einem bei Kontakt zwischen Harz- und Härterkomponente aushärtenden System. Sinnvollerweise wird der Klebstoff derart konfektioniert, dass selbst bei inhomogener Vermischung im Endprodukt keine unreagierten Harz- und Härterkomponenten übrigbleiben, so dass im ausgehärteten Zustand möglichst gute und homogene Materialeigenschaften erzielt werden. Deshalb ist ein Zweikomponentensystem derart konzipiert, dass die aktiven Bestandteile des einen Härtungsprozess Verbindungen umfassen oder vorzugsweise daraus bestehen, die mit mindestens einem aktiven Bestandteil mindestens eines anderen Härtungsprozesses und/oder Wasser reagieren können, wobei miteinander bei Raumtemperatur ohne Aktivierung reagierende Substanzen in verschiedenen Komponenten des Zweikomponentensystems abzupacken sind.

Für viele Anwendungen ist es speziell vorteilhaft, wenn einer der Härtungsprozesse eine photochemische Reaktion ist.

Ein speziell bevorzugtes Zweikomponentensystem enthält ein Harz/Härtersystem, das bei Kontakt, d.h. unabhängig von einer speziellen Aktivierung, reagiert, ein photochemisch reagierendes System enthaltend Harz und Aktivator sowie ein thermisch aktivierbares System, das ebenfalls Harz und Aktivator enthält. Wie solche Systeme auf die beiden Komponenten aufgeteilt werden können oder müssen ist hinten näher beschrieben. Als Harz für photoinduzierte Reaktionen sind insbesondere Acrylate geeignet, für thermisch härtende resp. übliche Zweikomponenten-härtende Systeme ist die Anwesenheit von Epoxidharzen bevorzugt, da diese gute Benetzungs- und Haftungseigenschaften auch auf beölten Oberflächen zeigen.

Im Rahmen der vorliegenden Erfindung bevorzugte Substanzen sind in der Folge angeführt:

### Photo-Aktivatoren (UV-Initiatoren) :

UV-Initiatoren sind Additive in strahlenhärtenden Systemen, die infolge Absorption ultravioletter oder sichtbarer Strahlung reaktive Zwischenprodukte bilden, die eine Polymerisationsreaktion auslösen können.
a) Radikalische Photoinitiatoren wie AlphaSpalter, bimolekulare Keton/Amin-Systeme, Benzilmonoketale, Acetophenon-derivate und Monoacylphosphinoxide, Diacylphosphinoxide, Alpha-Acyloximester, Thioxanthone, Alpha-Sulfonyloxyketone, und Titanocene wie z.B 2,2-Dimethoxy-1,2-diphenyl-ethanon, (1-Hydroxycyclohexyl)-phenylmethanon, 2-Hydroxy-2-methyl-1-phenyl-1-propanon, Alpha-Diphenylmethanon, 2,2-Diethoxyacetophenon, Diphenyl-(2,4,6-trimethylbenzoyl)-phosphinoxid, 2-Isopropylthioxanthon.
b) Ionische, die Lewis-Säuren oder Protonen freisetzen wie Ferrocenium-Komplexe und Triarylsulfonium-Salze.

### Thermo-Aktivatoren (Thermisch-labile Härter):

Cyanoguanidine, Imidazole, Harnstoffderivate wie Urone und tertiäre Amine, org. Peroxide, Pinakole, Azoverbindungen, Thiurame, BF₃-Addukte und deren Mischungen.

### Epoxid-Harze (dick- bzw. dünnflüssig):

Polykondensations- bzw. Polyadditionsharze, welche mindestens eine Epoxid-Gruppe enthalten und auch Addukte mit ungesättigten oder gesättigten Fettsäuren oder Aminguppen terminierte Monomer- bzw. Polymerverbindungen sein können.

Bevorzugte Polykondensationsprodukte sind solche von Bisphenol A und/oder F mit monofunktionellen, aromatischen und/oder aliphatischen Glycidylethern sowie deren Veresterungsprodukte.

### Weitere Beispiele für Epoxidharze sind a)

Polyglycidyl- und Poly(Beta-methylglycidyl)ester erhältlich durch Umsetzung einer Verbindung mit mindestens zwei Carboxylgruppen im Molekül und Epichlorhydrin bzw. Beta-Methylepichlorhydrin, oder erhältlich durch Umsetzung einer Verbindung mit mindestens zwei freien alkoholischen Hydroxygruppen und/oder phenolischen Hydroxygruppen und Epichlorhydrin oder Beta-Methylepichlorhydrin, b) Poly(N-glycidyl)verbindungen, c) Poly(S-glycidyl)verbindungen und d) Cycloaliphatische Epoxidharze.

Ferner seien modifizierte Flüssigharze, plastifizierte- und Spezialharze,feste und halbfeste Epoxid-harze sowie deren Lösungen wie Epoxid Novolak-Harze, heterocyclische Epoxidharze und reaktivverdünnte Epoxidharze erwähnt.

### Verbindungen mit aktivierten Doppelbindungen:

z.B. Allylgruppen, Vinylgruppen, Acrylatgruppen, konjugierte Doppelbindungen etc. Beispielsweise (Meth)acrylatgruppen enthaltende Verbindungen können niedermolekular und höhermolekular sein.

Niedermolekulare Verbindungen werden auch als Monomere bezeichnet und sind z.B. Epoxy(meth)acrylate, Trimethylol-triacrylate etc.

Höhermolekulare Verbindungen können beispielsweise Addukte, z.B. auf der Basis von Polyether, Polyester oder Polyurethan, sein. Für die Herstellung von Polyurethan-Acrylaten können geeignete aromatische, aliphatische und/oder cycloaliphatische Diisocyanate verwendet werden, wie z.B. handelsübliche wie 2,4- und/oder 2,6-Toluylendiisocyanat, m-Phenylendiisocyanat, Xylylendiisocyanat, 4,4'-Bisphenylendiisocyanat, 1,4-Tetramethylen- und/oder 1,6-Hexamethylen-diisocyanat, 1,4-Cyclohexylendiisocyanat, 1,5-Tetrahydronaphtalindiisocyanat, Methylendicyclohexylen-diisocyanat und dergleichen.

Für die partielle Umsetzung der endständigen Isocyanatgruppen eignen sich insbesondere entsprechende Ester mit einer Hydroxylgruppe in der esterbildenden Alkoholfunktion des (Meth)acrylatestermoleküls. Ein charakteristisches Beispiel hierfür ist etwa das Hydroxy-ethylacrylat bzw. Hydroxy-methacrylat.

### Füllstoffe:

Beispiele für erfindungsgemäss verwendbare Füllstoffe sind anorganische, mineralogische und organische Füllstoffe wie Carbonate, Sulfate, Silikate, Kieselsäuren, Oxide/Hydroxide und Fasern; Kugelförmige Füllstoffe, Russ, Kunststoff-Füllstoffe, Pigmente und Farbstoffe sowie unter Temperatureinfluss physikalisch gelierbare Füllstoffe.

### Polyole:

Zur Herstellung oligomerer Urethan-Vorprodukte werden neben den üblichen aromatischen, aliphatischen und/oder cycloaliphatischen Polyisocyanaten, insbesondere entsprechenden Diisocyanaten, in der bevorzugten Ausführungsform Polyole - hier wiederum insbesondere Diole - ausgewählter Molekulargewichts-Bereiche verwendet: Polyesterpolyole, aus Trimethylolpropan, 2,2-Dimethyl-1,3-propandiol, Propan-, Butan- und Hexandiol und Dicarbonsäuren oder deren Anhydride (Phthalsäure, Hexahydrophthalsäure, Isophthaläure, Maleinsäure oder Adipinsäure), Polyetherpolyole und Polyacrylatpolyole, Glycerol, Ether mit Polypropylen-glycol, Glycole, Glycerolpoly(oxypropylen)triol, Glycerol-polyether mit Propylenoxid, Glycerol-polypropylen glycol ether, Glycerol tri(polyoxypropylen)ether, Glycerol-polypropylen-glycoltriether, Glycerol-tri(polyoxypropylen)ether, Glycerolpropylen-oxid-polyether-triol, Glycerol-propylen-oxidpolymer.

Ferner können auch Vernetzer bzw. Kettenverlängerer, wie z.B. Monoethylenglycol, Diethylenglycol, Triethylenglycol, Butan-1,4-diol, Hexan-1,6-diole, Trimethyolpropan, Glycerin etc. eingesetzt werden.

### Härter:

Als Härter können sowohl Polyamine, Aminaddukte, Polyaminoamide, Ketimine (latentes Amin), als auch Isocyanat terminierte Mono- und Polymere zum Einsatz kommen.

### Katalysatoren/Beschleunier:

Zur Beschleunigung der 2K-Reaktion als auch der thermischen Endaushärtung können tertiäre Amine, Säuren wie Mineralsäuren, Carbonsäuren wie Salicylsäure, Sulfonsäuren und metallorganische Verbindungen eingesetzt werden.

Gemäss der vorliegenden Erfindung erfolgt die Härtung des erfindungsgemässen Zweikomponentensystems (auch als Klebstoff, Versiegelung oder Versiegelungsmasse bezeichnet), z.B. in einer Versiegelung, durch die vollständige Vernetzung des erfindungsgemässen zweikomponentigen Systems kombiniert mit mindestens einer weiteren Reaktion. Diese mindestens eine weitere Reaktion kann eine unter Aktivierung rasch ablaufende Reaktion sein, die - zu Beginn der Vernetzung ausgeführt - eine rasche Teilhärtung ergibt. Solche zu einer Teilhärtung führende Reaktionen sind z.B. eine photochemische Reaktion, die durch Licht, insbesondere UV-Licht, induziert wird und/oder eine thermisch aktivierte Reaktion. Bei der photochemischen Reaktion, z.B. durch UV-Licht ist zu beachten, dass das UV-Licht je nach Art der Versiegelung eine Eindringtiefe von ca. 0.01 bis 1 mm hat, so dass zumindest eine Oberflächenhärtung der Versiegelung erreicht wird. Ein tieferes Eindringen der UV-Strahlung ist auch möglich, hängt aber stark vom Material ab und wird in tieferen Schichten immer schwächer.

Alternativ oder zusammen mit einem photochemisch abbindenden System kann im Klebstoff auch ein unter Hitzeeinwirkung rasch härtendes System vorhanden sein, das zu der gewünschten Anfassbarkeit und Frühfestigkeit führen oder dazu beitragen kann. Wird ein solches System zur Erhöhung der Frühfestigkeit verwendet, werden zumindest Teilbereiche erhöhter Temperatur ausgesetzt, derart, dass mindestens stellenweise rasche Härtung erzielt wird. Vollständige Aushärtung eines unter Hitzeeinwirkung rasch härtenden Systems kann - falls nicht bereits erfolgt-beispielsweise im KTL-Ofen erlangt werden.

Die Erfindung wird in der Folge für einen Klebstoff mit photoinduziert härtendem System beschrieben.

Der Auftrag der Versiegelung erfolgt vorteilhaft in einer Stärke von 150-4000 µm, insbesondere im Bereich 350-1000 µm. Vorzugsweise wird die Versiegelung in Form einer Raupe aufgetragen, wobei der Raupenauftrag z.B. als Swirl erfolgen kann.

Eine lichtinduzierte Härtung, insbesondere mittels UV-Licht, kann vorteilhaft unmittelbar nach dem Auftrag der Versiegelung erfolgen, vorzugsweise spätestens wenige Minuten nach dem Auftrag. Die UV-Bestrahlung kann gleichzeitig, vor oder nach einer Wärmezufuhr erfolgen, insbesondere einer IR-, Heissluftfön- oder Induktionshärtung, bei der die zu versiegelnden Blechbereiche bzw. unmittelbar benachbarte Blechbereiche erwärmt werden.

Eine Erwärmung des Falzbereiches unmittelbar vor dem Auftrag der Versiegelungsmasse, hilft ebenfalls die Blasenbildung, die gegebenenfalls durch eingeschlossene Luft zwischen Bördelfalzklebstoff und Versiegelungsschicht verursacht wird, zu verhindern (siehe dazu auch EP 0 254 870 A2).

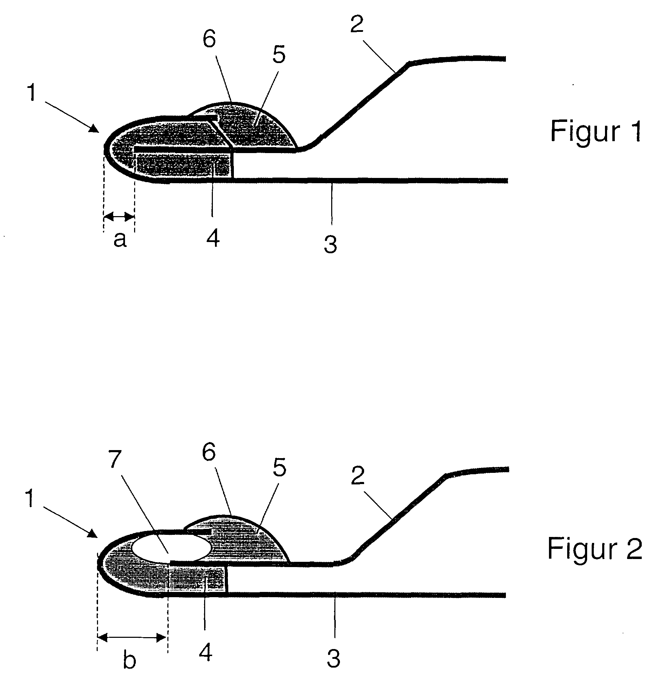

Die diesbezüglich relevante Problematik ist in den Figuren 1 und 2 veranschaulicht.

Die Figur 1 zeigt ein Türaussenblech 3, das über ein Türinnenblech 2 gefalzt ist und im Bereich des Falzes 1 mit einem Bördelfalzklebstoff 4 verbunden ist. Der Bördelfalzklebstoff 4 wird vor dem Falzen aufgetragen und ist in seiner Menge so bemessen, dass er bei einem Abstand a (Türinnenblech 2 - Falzbiegung) den gesamten Falzbereich ausfüllt. Über den äusseren Falzbereich 1 ist eine Versiegelung 5 aufgetragen, welche durch UV-Bestrahlung von aussen 6 und durch die Vernetzung des Zweikomponentensystems soweit vernetzt wird, dass sie griffest, auswaschbeständig, dicht gegen aufblähende Gase von Innen und dicht gegen das Eindringen von Gasen oder Flüssigkeiten von Aussen ist.

In Figur 2 ist der gleiche Falz 1 wie in Figur 1 dargestellt, jedoch mit einer Verschiebung b des Türinnenblechs 2 bezüglich des Türaussenblechs 3, so dass die eingebrachte Menge des Bördelfalzklebstoffs 4 den Falz nicht vollständig ausfüllt. Hierdurch kann durch die Überschichtung mit der Versiegelung 5 eine Luftblase 7 eingeschlossen werden, die sich bei den bisher durchgeführten Härtungsprozessen im KTL-Umluftofen ausdehnt und die Versiegelung 5 aufbläht. Bei den erfindungsgemässen Verfahren ist die Versiegelung 5 jedoch doppelt, durch UV-induzierte Härtung 6 und durch die Vernetzung des Zweikomponentensystems, vorgehärtet, so dass bei einer späteren endgültigen Härtung im KTL-Umluftofen die eingeschlossene Luftblase 7 nicht mehr durchbrechen kann.

Falls die UV-Bestrahlung unmittelbar nach dem Auftrag erfolgt, muss darauf geachtet werden, dass nicht die gesamte Schichtdicke der Versiegelungsbeschichtung vorvernetzt wird, da die Zeit für eine optimale Benetzung zu kurz wäre. Eine gute Benetzung zum Blech kann erst nach der Absorption des darauf befindlichen Öls erfolgen und ist die Grundvoraussetzung, um eine korrosionsbeständige Haftung zum Blech zu erzielen.

Da neben den rasch härtenden Bestandteilen auch das Zweikomponentensystem bei Einhaltung der Verarbeitungsvorschrift, d.h. Mischungsverhältnis und Vermischungsqualität vernetzt, wird eine Auswaschbeständigkeit und eine Griff-Festigkeit unabhängig von thermischen Härtungsbedingungen erreicht. Durch leichte Erwärmung der Versiegelung kann die Härtungszeit wesentlich verkürzt werden, wobei die Erwärmung unterhalb von maximal 150°C, bevorzugt unterhalb von 120°C erfolgen sollte, da sonst die Gefahr eines Bauteilverzuges besteht. Als thermische Quellen kommen z.B. Induktion, Infrarot (IR)-Bestrahlung, Heissluftfön etc. in Frage. Im Falle von IR-Bestrahlung bzw. Heissluftfön kann zwar auf die teure Investition für eine Induktionsanlage verzichtet werden, diese Verfahren sind jedoch nicht so leistungsfähig wie die induktive Erhitzung.

Bei der Montage der Anbauteile, z.B. einer Tür, an die Karosserie müssen diese gegebenenfalls durch eine manuelle Korrektur an die Karosserie angepasst werden. Dabei sollte die Versiegelungsmasse eine solche Griff-Festigkeit aufweisen, dass bei der manuellen Verwindung der Anbauteile keine Fingerabdrücke bzw. -eindrücke auf der Versiegelungsoberfläche zurückbleiben.

Die mit der erfindungsgemässen Versiegelungsmasse versiegelte Oberfläche ist in kurzer Zeit nach der Applikation griffest und geschützt gegen das Eindringen von Gasen oder Flüssigkeiten in die Versiegelung, so dass bei einem späteren thermischen Härten im KTL-Umluftofen keine Blasen aufgeworfen werden. Ausserdem ist durch die bereits vorliegende Oberflächenhärtung ein Austreten bereits eingeschlossener Gase bei einer thermischen Härtung unterdrückt bis verhindert.

In einer bevorzugten Ausführungsform weist das UV-reaktive Zweikomponentensystem eine sehr lange Topfzeit auf, und die Vernetzungsreaktion wird erst durch eine kurze thermische Erwärmung in Gange gesetzt und läuft nach der Entfernung der Wärmequelle dennoch mit hoher Geschwindigkeit exotherm weiter. Eine lange Topfzeit hat den Vorteil, dass einerseits die Verarbeitung robust ist und dass die Mischeinheit nicht nach jedem kleinen Unterbruch auswechselt werden muss und andererseits das Zweikomponentensystem eine bessere Benetzung bzw. Haftung zum beölten Metallsubstrat aufbauen kann, da ein schnelles Zweikomponentensystem bereits gehärtet ist, bevor der Klebstoff das auf dem Substrat vorhandene Öl absorbiert und das Blech benetzt hat. Um eine funktionsfähige Benetzung zu erlangen, ist auf eine optimale Einhaltung der Parameter, einerseits der Zeit nach der Applikation und andererseits auf das Ausmass der thermischen Erwärmung (Verweilzeit auf einem Temperaturniveau), zu achten. Ferner, abhängig von der Konsistenz des Zweikomponentensystems ist eine Verarbeitung bei leicht erhöhter Raumtemperatur (< 60°C) erforderlich, um eine günstige Benetzung zu unterstützen. Dies gilt insbesondere für thermoplastische Zweikomponentensysteme.

Unter Berücksichtigung der oben beschriebenen Problematik und um eine bestmögliche Qualität bzgl. des Langzeitverhaltens zu erlangen, sollten bei einer kurzen Taktzeit (z.B. weniger als eine Minute) nur diejenigen Abschnitte der Versiegelung einer hohen thermischen Erwärmung unterworfen werden, welche vom Werker beim Richten des Anbauteiles angefasst werden. Die Versiegelungsmasse auf den nicht thermisch vorbehandelten Abschnitten vernetzen bei Raumtemperatur weiter und erreichen abhängig vom Prozessablauf innerhalb von üblicherweise 2 und mehr Stunden bis zu den Reinigungsbädern und für den KTL-Durchgang eine für diese Weiterbearbeitungen genügend hohe Festigkeit.

In einer alternativen Ausgestaltung der Erfindung ist der Klebstoff nach der Vernetzung des Zweikomponentensystems und gegebenenfalls der mittels UV-Bestrahlung bzw. thermisch induzierten Vernetzung einerseits noch nicht vollständig ausgehärtet, weist aber andererseits für den KTL-Durchgang eine ausreichende Festigkeit und genügend plastische Anteile auf, die helfen z.B. einen Bruch im Klebstoff in der Unterfütterungsverklebung oder eine Rissbildung in der Versiegelungsmasse beim KTL-Ofendurchgang zu verhindern und gleichzeitig Spannungen auszugleichen, um keine Markierung bzw. Abzeichnung sichtbar werden zu lassen. Die Gefahr einer Rissbildung oder Markierung besteht insbesondere dann, wenn die beiden Bauteile, das Innenteil und das Aussenteil, unterschiedlich schnell erwärmt und auch abgekühlt werden, was zu Verschiebungen der beiden Teile im Bördelflanschbereich führt bzw. zu Blechverformung (Verwerfungen) bei der Unterfütterungsverklebung.

Da das erfindungsgemässe UV-aktive Zweikomponentensystem für den KTL-Durchgang nicht vollständig ausgehärtet sein muss, und oft vorzugsweise nicht vollständig ausgehärtet ist, ist eine genaue Einhaltung der Mischungsverhältnisse nicht unbedingt notwendig. Dies steht im Gegensatz zu herkömmlichen Zweikomponentensystemen, die primär durch Reaktion der Harz- mit der Härterkomponente reagieren.

Das erfindungsgemässe Verfahrenssystem beruht auf einer mindestens zweifachen (Vor)vernetzung der Bördelfalzversiegelung. Dabei wird die UV-aktive Versiegelungsmasse mittels UV-Bestrahlung zur Reaktion gebracht und andererseits erfolgt eine Vernetzung aufgrund der Vermischung der beiden Komponenten des Zweikomponentensystems.

Die Härtung von Aussen mittels UV-Bestrahlung vernetzt teilweise die Bördelfalzversiegelung und bewirkt erstens eine für die manuelle Handhabung wichtige Anfassbarkeit und leistet wesentlich einen Beitrag zur Griff-Festigkeit, zweitens eine Auswaschbeständigkeit gegenüber den bis zu 70°C heissen, mit hohem Druck zirkulierenden Flüssigkeiten in den Reinigungsbädern für das Entfetten der beölten Karosserie, das Phosphatieren und den Durchgang durch das KTL-Bad und drittens, aufgrund der fortgeschrittenen Vernetzung, eine lange Offenliegezeit zum Teil auch in heiss-feuchten klimatischen Bedingungen von mehr als 3 Wochen. Die Offenliegezeit definiert die Zeit, innerhalb der der Klebstoff die spezifizierte Funktion erfüllt und keine Qualitätseinbusse nach der vollständigen Härtung im KTL-Umluftofen, welche bei Temperaturen um 180°C innerhalb von ca. 25 Minuten erfolgt, erleidet. Der Klebstoff neigt im allgemeinen dazu im nicht 100%ig vernetzten Zustand Wasser aufzunehmen, was bei der Hitzehärtung zu Blasenbildungen führt, was sowohl die Optik als auch die Festigkeit negativ beeinflussen kann. Durch die von aussen nach innen wirkende UV-Vorvernetzung wird gerade die Aufnahmefähigkeit der äusseren Schicht vermindert, ohne dass die Benetzung des Bleches beeinträchtigt wird.

Für den mit UV-Strahlung vernetzenden Bestandteil des Klebstoffes kommen aktivierte Doppelbindungen, wie z.B. Acrylatgruppen enthaltende Verbindungen, in Frage, wobei die Auslösung der radikalischen Polymerreaktion über einen Photoinitiator - einen mit UV-Strahlen initiierten Radikalbildner - erfolgt oder z.B. Epoxidgruppen enthaltende Verbindungen, wobei die Auslösung der kationischen Polymerreaktion über einen Photoinitiator - einen mit UV-Strahlen initierten Kationenbildner - erfolgt. Abhängig vom Photoinitiator liegt die optimale Wellenlänge im Bereich von 200 bis 700 nm. Um ein zufriedenstellendes Ergebnis bezüglich der Griff-Festigkeit etc. zu erlangen, ist eine Bestrahlungsdauer von weniger als 30 Sekunden, insbesondere weniger als 5 Sekunden bei einer Intensität von insbesondere 0,001 bis 50 Watt/cm² geeignet. Dies ermöglicht ein rationelles Verfahren, bei dem z.B. die UV-Bestrahlung direkt nach dem Auftrag der Versiegelung im gleichen Arbeitsschritt mittels Roboter durchgeführt werden kann. Die UV-Lampe sitzt vorteilhaft quasi hinter der Applikationsdüse für die Versiegelung.

Ausserdem kann in einer bevorzugten Ausführung die mit UV-Bestrahlung induzierte Reaktion, wie auch das Zweikomponentensystem selbst, beschleunigt werden, indem die Versiegelungsmasse z.B. auf Temperaturen um 50°C und mehr erwärmt wird. Dies kann dadurch erfolgen, dass die aufzutragende Versiegelungsmasse selbst, z.B. mittels Heissluftfön, und/oder induktiv über das metallische Bauteil erhitzt wird.

Vorteilhaft sind insbesondere die Erwärmung mittels IR bzw. Heissluftfön, da hierdurch die Gefahr von Verzügen der Bauteile deutlich herabgesetzt bzw. eliminiert ist. Bei diesen Verfahren werden die Bauteile nämlich aufgrund der geringeren Wärmezufuhr thermisch weniger beansprucht, als dies z.B. bei der induktiven Erhitzung der Fall ist.

Eine optische Einbusse ist aufgrund von Lufteinschlüssen in der Bördelung zwischen der Verklebung und der Versiegelung stark herabgesetzt, da der Klebstoff mit der mindestens zweifachen Vorvernetzung (UV und beginnende 2K-Reaktion und/oder thermisch aktiviert) in kurzer Zeit eine genügend hohe Festigkeit aufbaut und somit Luftdurchschüsse bei der Erhitzung im KTL-Umluftofen verhindert.

Da die Versiegelung nicht wie heute in der Lackiererei von Hand, sondern im Rohbau mittels Roboter materialsparend und demzufolge wirtschaftlicher durchgeführt werden kann, können Ressourcen, wie Raum und Zeitbedarf in der Lackiererei, eingespart werden.

Das erfindungsgemässe Klebstoffsystem beinhaltet Eigenschaftsvorteile, wie gute Handhabungs- bzw. Positionsfestigkeit sowie lange Offenliegezeit, und erfüllt somit alle Forderungen für einen sicheren Transport sowohl intern als auch extern. Es überwindet zudem die Nachteile des Standes der Technik, bei dem die Qualität aufgrund von Blasenbildungen herabgesetzt wird. Die erfindungsgemässen Vorteile erlauben eine zentrale Fertigung von Bauteilen, wie z.B. von Türen, Heck- und Frontklappen, Schiebedachdeckeln etc., und deren Versand an externe Fertigungslinien. Dieser Teiletourismus wird auch als CKD (= completely knocked down) bezeichnet und ist wirtschaftlich, da auf Investitionen für die Herstellung des Karosserierohbaues verzichtet werden kann.

Je nach verwendeter Versiegelung ist darauf zu achten, dass insbesondere bei einer nicht genügenden exothermen Reaktion eine Härtung möglicherweise unterbleibt, wenn der Härtungsprozess nicht mit einer genügenden Intensität durchgeführt wird. Zur Sicherstellung des Erfolgs des Härtungsprozesses ist entsprechend mit einer genügenden Intensität der die Härtung bewirkenden Parameter (UV-Licht, Wärme, etc.) zu arbeiten.

Der Bördelfalzklebstoff soll für eine optimale Verarbeitung in dünnen Schichten applizierbar sein und eine gute Ölbenetzung aufweisen. Nach der Hitzehärtung im KTL-Umluftofen ist eine gute und alterungsbeständige Haftung auf den metallischen Substraten, eine Festigkeit von mehr als 15 MPa und eine Bruchdehnung von mindestens 5 % gefordert.

Damit sich die beiden Teile, d.h. Innenteil und Aussenteil, bei der Montage des Anbauteiles und insbesondere bis und mit KTL-Durchgang nicht verschieben, werden gemäss Stand der Technik die Bördelfalzklebstoffe vorgeliert.

Das erfindungsgemässe Klebstoffsystem kann sowohl für die Unterfütterung, Bördelfalzverklebung als auch für die Versiegelung derselben verwendet werden, obwohl - bei einem mit UV vernetzten System - der Bördelfalzklebstoff aufgrund der UV-Nichtbestrahlung schlechte Frühvernetzung zeigt. Eine genügende Positionsfestigkeit wird normalerweise dennoch erreicht, da die Versiegelungsmasse ebenfalls zur strukturellen Festigkeit beiträgt. Falls gewünscht, kann zusätzliche Festigkeit erzielt werden durch partielle thermisch induzierte Vernetzung, wobei dabei Sorge getragen werden muss, dass nicht zu stark vernetzt und damit die Benetzung beeinträchtigt wird. Die endgültige Härtung, z.B. bei Vorhandensein unreagierter, UV-aktiver Acrylatgruppen, erfolgt dann im KTL-Umluftofen zusammen mit den gegebenenfalls vorhandenen Epoxidgruppen enthaltenden Bindemitteln durch einen thermisch labilen latenten Härter. Ferner hat die Verwendung desselben Klebstoffes für die Bördelfalzverklebung und -versiegelung den Vorteil, dass eine gute Zwischenhaftung gewährleistet ist.

Für die Versiegelung soll die Bruchdehnung möglichst hoch liegen und mindestens 15 %, besser grösser als 30 % betragen, um keine Rissbildungen infolge von thermischen Spannungen zu riskieren.

In einer alternativen Ausführungsform vernetzt das erfindungsgemässe Zweikomponentensystem nur teilweise, und dies ohne die mit UV-Bestrahlung induzierte Reaktion, zu einer solchen zähplastisch-verformbaren bis gummiartigen Konsistenz, dass der Klebstoff, z.B. in der Anwendung Unterfütterung, die Pumpbewegungen des Aussenbleches zum Innengerippe (Auseinanderverschiebung von bis zu 10 mm und mehr) beim Durchgang durch die Reinigungsbäder problemlos mitmacht und dabei auch nicht durch die mit Druck zirkulierenden, ca. 60°C warmen Flüssigkeiten aus dem Klebespalt gespült wird. Die endgültige Härtung geschieht dann, thermisch aktiviert, im KTL-Umluftofen. Bei diesem Zweikomponentensystem vollzieht sich die Vernetzung des Zweikomponentensystems absichtlich nur teilweise (wie oben beschrieben) und die vollständige Härtung erfolgt durch einen anderen Härtungsprozess, vorwiegend mittels Erwärmung im KTL-Umluftofen.

Die oben beschriebenen Klebstoffe sind in der Regel auf der Basis der Epoxid-Technologie, Kautschuk-Technologie, Polyurethan-Technologie oder Acrylat-Technologie etc. und abhängig vom Anforderungsprofil auch in Kombination mit Füllstoffen, Haftvermittlern, Stabilisatoren, Pigmenten, Katalysatoren, geeigneten organischen Polymerfüllstoffen etc. formuliert. Einige Beispiele für solche Zusätze liefert die DE 33 14 896 A1, auf die auch insbesondere hinsichtlich der Reaktionsbedingungen Bezug genommen wird.

Das erfindungsgemässe Zweikomponentensystem kann auf verschiedene Weise aufgebaut werden, wobei beide Komponenten in einer bevorzugten Ausführungsform selbsthärtend, entweder durch Feuchtigkeit oder durch Wärmezufuhr oder durch Lichteinwirkung, sind. Dies wird u.a. dadurch erreicht, dass dem jeweiligen Bindemitteltyp ein für die Auslösung der Vernetzung erforderliches Additiv beigemischt wird. Das heisst z.B. zu einem Acrylatgruppen enthaltenden Bindemittel, ein durch UV-Bestrahlung aktivierbarer oder ein thermisch-labiler Initiator, zu einem Epoxidgruppen enthaltenden Bindemittel ein latent thermisch-labiler Härter und zu einem Isocyanatgruppen enthaltenden Bindemittel gegebenenfalls ein feuchtigkeitssensitiver latenter Härter, wie z.B. Ketimine oder Aldimine. Durch Selbstvernetzung der einzelnen Komponenten wird auch bei schlechter Vermischung der Komponenten vollständige Durchhärtung und damit bessere Eigenschaften des ausgehärteten Kleb- resp. Dichtstoffs erzielt.

Im folgenden werden einige Beispiele für Zusammensetzungen erfindungsgemässer Zweikomponentensysteme aufgezeigt, die die Erfindung weiter veranschaulichen sollen, den Umfang der Erfindung aber in keiner Weise beschränken.

### Beispiel 1:

Die Komponente A besteht aus mindestens einem Acrylatgruppen enthaltenden Bindemittel, mindestens einem UV-Initiator und mindestens einem thermisch-labilen Initiator, und die Komponente B aus einem mit den Acrylatgruppen reagierenden Härter, wie z.B. Aminen. Um der Selbsthärtung Genüge zu tun, kann die Komponente B ebenfalls noch mindestens ein Silangruppen enthaltendes Bindemittel enthalten. Der Härter kann - falls gewünscht - vorteilhafterweise in einer solchen Menge zudosiert werden, dass nur Teilvernetzung resultiert, wobei durch diese Teilvernetzung aber eine für den KTL-Durchgang optimale Festigkeit (zähplastisch-verformbar bis gummiartig) erreicht wird.

### Beispiel 2:

Die Komponente B des Beispiels 1 kann zusätzlich mindestens einen Initiator für die radikalische Polymerisation von aktivierten Doppelbindungen in Komponente A enthalten, wobei in diesem Fall eine Teilvernetzung weniger möglich ist.

### Beispiel 3:

Die Komponente A enthält zusätzlich zu jener nach Beispiel 1 mindestens ein Epoxidgruppen enthaltendes Bindemittel und mindestens einen latenten Härter, um die Haftung zum Metallblech zu verbessern. Alternativ können auch beide reaktiven Gruppen, die Epoxidgruppen bzw. Acrylatgruppen in der gleichen Verbindung vorhanden sein.

### Beispiel 4:

Die Komponente A besteht aus mindestens einem Acrylatgruppen enthaltenden Bindemittel, mindestens einem UV-Initiator und mindestens einem Isocyanatgruppen enthaltenden Bindemittel und die Komponente B besteht aus mindestens einem Epoxidgruppen enthaltendem Bindemittel, das auch OH-Gruppen aufweist, gegebenenfalls zusätzlichen OH-Gruppen enthaltenden Verbindungen, welche Vernetzer oder Polyole sein können, und mindestens einem für die Epoxidgruppen thermisch-labilen Härter.

### Beispiel 5:

Das Acrylatgruppen enthaltende Bindemittel, in Beispiel 4 in der Komponente A enthalten, kann alternativ auch in der Komponente B (zusammen mit dem Epoxidgruppen enthaltenden Bindemittel) vorliegen.

### Beispiel 6:

Die in den Beispielen 1 bis 4 erwähnten Acrylatgruppen enthaltenden Bindemittel können durch Bindemittel mit anderen aktivierten Doppelbindungen ersetzt werden.

### Beispiel 7:

Anstelle des oder in Kombination mit einem Isocyanatgruppen enthaltenden Bindemittel können auch Silangruppen enthaltende Bindemittel verwendet werden.

Während bei den Bindemitteln Gemische vorteilhaft sein können, um bestimmte Materialeigenschaften zu erzielen, sind üblicherweise nur ein Initiator und/oder Aktivator und/oder labiler Härter pro Komponente anwesend.

## Patentansprüche

1. Zweikomponentensystem mit einer Harzkomponente und einer Härterkomponente, **dadurch gekennzeichnet, dass** eine Härtung erfolgt, indem es mittels mindestens zweier nicht gleichartiger Härtungsprozesse vernetzt, wobei der eine Härtungsprozess eine bei Raumtemperatur ablaufende Reaktion zwischen mindestens einem Harz und mindestens einem Härter ist und wobei mindestens ein weiteres vernetzendes System vorhanden ist, das mittels eines Härtungsprozesses vernetzt, bei dem die aktiven Bestandteile des Vernetzenden Systems mittels einer photochemischen und/oder thermisch-aktivierbaren Reaktion reagieren, wobei die aktiven Bestandteile des vernetzenden Systems, das mittels photochemischer Reaktion härtet ein mittels Photoaktivator reaktivierbares Harz und einen photo-induzierbaren Photoaktivator enthalten und die aktiven Bestandteile des vernetzenden Systems, das thermisch-aktivierbar härtet, ein mittels Thermo-Aktivator reaktivierbares Harz und einen thermisch-induzierbaren Thermo-Aktivator.

2. Zweikomponentensystem gemäss Anspruch 1, **dadurch gekennzeichnet, dass** zusätzlich ein Härtungsprozess mittels Feuchtigkeit erfolgt.

3. Zweikomponentensystem gemäss Anspruch 1 oder 2, **dadurch gekennzeichnet, dass** die Härtung in mindestens zwei Stufen erfolgt, wobei mindestens die erste Stufe nur zu einer Teilvernetzung führt.

4. Zweikomponentensysteme gemäss Anspruch 3, **dadurch gekennzeichnet, dass** durch die Teilvernetzung eine Konsistenz bzw. Festigkeit resultiert, welche einen robusten Prozess im Karosseriebau bis und mit KTL-Durchgang ermöglicht.

5. Zweikomponentensystem gemäss einem der Ansprüche 1 bis 4, **dadurch gekennzeichnet, dass** es eine Topfzeit von mindestens 30 Minuten aufweist.

6. Zweikomponentensystem gemäss einem der Ansprüche 1 bis 5, **dadurch gekennzeichnet, dass** die Zweikomponenten-Reaktion erst durch eine kurze thermische Erwärmung, insbesondere eine Erwärmung auf 50 bis 150°C in Gange gesetzt wird.

7. Zweikomponentensystem gemäss einem der Ansprüche 1 bis 6, **dadurch gekennzeichnet, dass** die aktiven Bestandteile des einen Härtungsprozess Verbindungen umfassen oder daraus bestehen, die mit mindestens einem aktiven Bestandteil mindestens eines anderen Härtungsprozesses und/oder Wasser reagieren können, wobei miteinander bei Raumtemperatur ohne Aktivierung reagierende Substanzen in verschiedenen Komponenten des Zweikomponentensystems abgepackt sind.

8. Zweikomponentensystem gemäss einem der Ansprüche 1 bis 7, **dadurch gekennzeichnet, dass** einer der Härtungsprozesse eine photochemische Reaktion ist.

9. Verfahren für die Anwendung der Zweikomponentensysteme gemäss einem der Ansprüche 1 bis 8, **dadurch gekennzeichnet, dass** die zwei Komponenten gemischt und anschliessend im gewünschten Bereich appliziert werden, worauf mittels Photoinduktion eine photochemische Reaktion und/oder mittels thermischer Induktion eine thermischaktivierbare Reaktion mindestens in einem Teil des Applikationsbereichs gestartet wird.

10. Verfahren zum Versiegeln eines Karosserieabschnittes, **dadurch gekennzeichnet, dass** ein Zweikomponentensystem gemäss einem der Ansprüche 1 bis 8 vor dem KTL-Durchlauf mittels thermischer Induktion und/oder insbesondere photoinduzierte Härtungsprozess mindestens teilweise ausgehärtet wird.

11. Verfahren zum Versiegeln eines Karosserieabschnitts durch Auftrag einer Versiegelungsmasse auf einen zu versiegelnden Karosserieabschnitt und Härten der Versiegelungsmasse, **dadurch gekennzeichnet, dass** die Versiegelungsmasse hergestellt wird durch Vermischen eines zweikomponentensystems gemäss einem der Ansprüche 1 bis 8, und dass die Härtung mittels mindestens zweier nicht gleichartiger Härtungsprozesse erfolgt, wobei einer der Härtungsprozesse eine zweikomponentige und mindestens ein weiterer eine photochemische und/oder thermische-aktivierbare Härtung beinhaltet.

12. Verfahren gemäss Anspruch 11, **dadurch gekennzeichnet, dass** eine Härtung eine photochemische Härtung ist.

13. Verfahren gemäss Anspruch 11 oder 12, **dadurch gekennzeichnet, dass** die photochemische Härtung und/oder mindestens eine Stufe einer thermischen Härtung vor einer andersartigen Beschichtung oder Benetzung des Karosserieabschnitts, insbesondere vor einer Entfettung und/oder Lackierung, durchgeführt werden.

14. Verfahren gemäss einem der Ansprüche 11 bis 13, **dadurch gekennzeichnet, dass** vor einer Lackierung des Karosserieabschnitts nur Teilhärtungen durchgeführt werden.

15. Verfahren gemäss einem der Ansprüche 11 bis 14, **dadurch gekennzeichnet, dass** sie mittels zweier nicht gleichartiger Härtungsprozesse gehärtet wird, die vor einer andersartigen Beschichtung oder Benetzung des Karosserieabschnitts, insbesondere einer Lackierung durchgeführt werden.

16. Verfahren nach Anspruch 15, **dadurch gekennzeichnet, dass** einer der Härtungsprozesse, insbesondere eine photochemische Reaktion, primär die äussere Oberfläche der Versiegelung härtet und der andere Härtungsprozess, insbesondere eine thermisch-aktivierte Reaktion, entweder insbesondere den Kontaktbereich der Versiegelung mit dem Karosserieabschnitt oder innere Bereiche der Versiegelung härtet.

17. Verfahren gemäss einem der Ansprüche 11 bis 16, **dadurch gekennzeichnet, dass** der eine Härtungsprozess eine thermische Härtung durch nur partielle Erwärmung des Klebstoffs ist und/oder zumindest in einer ersten Stufe ofenfrei erfolgt, insbesondere durch induktive Erwärmung, IR-Strahlung und/oder Heissluftfön.

18. Verfahren gemäss einem der Ansprüche 11 bis 17, **dadurch gekennzeichnet, dass** die nicht gleichartigen Härtungsprozesse in einem zeitlichen Abstand von weniger als 2 Stunden durchgeführt werden.

19. Verfahren gemäss Anspruch 18, **dadurch gekennzeichnet, dass** die Härtungsprozesse in einem zeitlichen Abstand von weniger als 1 Stunde, insbesondere weniger als 20 Minuten und vorzugsweise in einem Abstand von weniger als 5 Minuten durchgeführt werden.

20. Verfahren gemäss einem der Ansprüche 9 bis 19, **dadurch gekennzeichnet, dass** die Härtungsprozesse ausgewählt sind aus der Gruppe umfassend Ofenhärtung, induktive Härtung, Härtung mittels eines Heissluftföns, photochemische Vernetzung reaktive Nachhärtung ohne besondere Energiezufuhr sowie Kombinationen derselben.

21. Verfahren gemäss einem der Ansprüche 9 bis 20, **dadurch gekennzeichnet, dass** die mindestens eine Teilhärtung bewirkenden Härtungsprozesse bis mindestens zu einer Oberflächenhärte der Versiegelungsmasse durchgeführt werden, die für eine Anfassbarkeit bzw. Griff-Festigkeit für eine manuelle Handhabung ausreichend ist, und/oder bis zu einer Auswaschbeständigkeit mit bis zu 70°C heissen, zirkulierenden Reinigungsbädern für das Entfetten geölter Karosserieteile, das Phosphatieren und/oder eine elektronische Tauchlackierung und/oder eine Offenliegezeit unter tropischen Klimabedingungen von mehr als drei Wochen.

22. Verfahren gemäss einem der Ansprüche 9 bis 21, **dadurch gekennzeichnet, dass** mindestens einer der ersten Härtungsprozesse durchgeführt wird, bis die Versiegelung mindestens eine Festigkeit, insbesondere im Kontaktbereich zum Karosserieabschnitt, hat, dass in der weiteren Prozessfolge optische Einbussen aufgrund von Lufteinschlüssen zwischen der Verklebung und der Versiegelung vermindert werden.

23. Verfahren nach einem der Ansprüche 9 bis 22, **dadurch gekennzeichnet, dass** damit im Karosserie-Rohbau eine Bördelfalzversiegelung hergestellt wird, die sowohl mit UV-Strahlen als auch thermisch zusammen mit der Bördelfalzverklebung vorgehärtet wird derart, dass die so hergestellten Anbauteile transportiert und danach, nach Durchgang durch zumindest ein Reinigungsbad und eine Lakkierung, insbesondere ohne optische bzw. funktionelle Einbusse der Versiegelung, im Ofen zusammen mit der Lakkierung vollständig thermisch gehärtet werden können.
